# EUROPÄISCHE PATENTSCHRIFT

(11) **EP 1 715 359 B1**
(45) Veröffentlichungstag und Bekanntmachung des Hinweises auf die Patenterteilung: **16.07.2008**
(21) Anmeldenummer: 06007955.5
(22) Anmeldetag: 16.04.2006
(51) Int. Cl.: G01S 1/04, G01S 1/00, G01S 1/02

(54) **Signal-Simulationseinrichtung**
Signal simulation device
Dispositif pour effectuer une simulation de signaux

(30) Priorität: 19.04.2005 DE 102005018163
(43) Veröffentlichungstag der Anmeldung: 25.10.2006
(73) Patentinhaber: Deutsches Zentrum für Luft- und Raumfahrt e.V., 51147 Köln (DE)
(72) Erfinder: Hornbostel, Achim, Dr., 82211 Herrsching (DE); Schroth, Arno, Dr., 81243 München (DE); Konovaltsev, Andriy, Dr., 82205 Gilching (DE); Steingass, Alexander, Dr., 82205 Gilching (DE); Eckardt, Andreas, Dr., 12524 Berlin (DE); Venus, Holger, 12557 Berlin (DE)
(74) Vertreter: von Kirschbaum, Albrecht

(56) Entgegenhaltungen:
- US-A1- 2002 053 989
- A. HORNBOSTEL, A. SCHROTH, H. DENKS, M. HOLBROW: "A New Signal Simulation Tool for Testing of Receivers with Controlled Reception Pattern Antennas" PROCEEDINGS ION 2004, 21. September 2004 (2004-09-21), Seiten 2595-2603, XP002409951 Long Beach CA, USA

## Beschreibung

Die vorliegende Erfindung betrifft eine Signal-Simulationseinrichtung zum Testen und Entwickeln von Funk-Empfängern, insbesondere Satellitennavigationsempfängern, die zum Ausrichten mehrerer unabhängiger Antennenkeulen auf verschiedene signalaussendende Funk-Sender und zur gleichzeitigen Unterdrückung von Störsignalen fähig sein sollen und dazu eine aus Elementen zusammengesetzte, adaptiv steuerbare Gruppenantenne aufweisen, unter Verwendung eines mehrere reproduzierbare digitale Signale im komplexen Basisband erzeugenden Signalgenerators und eines damit kombinierten und synchronisierten digitalen Matrixprozessors, dessen Eingangssignale die im Signalgenerator im komplexen Basisband erzeugten digitalen Signale sind und dessen Ausgangssignale die empfangenen Signale der einzelnen Elemente der Gruppenantenne des Funk-Empfängers bilden, wobei die Eingangssignale des Matrixprozessors innerhalb dieses Matrixprozessors im digitalen Bereich durch Phasenverschiebung entsprechend ihrer Einfallsrichtung und der relativen Positionen der Elemente innerhalb der Gruppenantenne des Funk-Empfängers moduliert und die phasenverschobenen Signale kombiniert und auf die einzelnen Ausgänge des Matrixprozessors gegeben werden.

Im Zusammenhang mit verschiedenen Projekten sowohl im Kommunikations- als auch im Navigationsbereich werden Empfänger mit adaptiven Gruppenantennen entwickelt, die in der Lage sein sollen, mehrere unabhängige Antennenkeulen auf verschiedene Sender, z. B. auf Satelliten, auszurichten und gleichzeitig Störsignale zu unterdrücken. Zum Testen und zur Entwicklung derartiger Empfänger sind Signalsimulatoren notwendig, die es gestatten, reproduzierbare Signale zu erzeugen, die im Labor in den Empfänger eingespeist werden können.

Eine der Hauptstörquellen bei der Satellitennavigation sind Mehrwegesignale, d.h. Signale die erst nach ein- oder mehrfacher Reflexion, beispielsweise an Gebäuden, auf die Antenne des Navigationsempfängers treffen. Für die Satellitennavigation gibt es beispielsweise Simulatoren, die in der Lage sind, Signale von mehreren GPS-Satelliten und zukünftig auch von Galileo-Satelliten zu erzeugen. Diese Simulatoren haben jedoch nur relativ einfache Möglichkeiten zur Berücksichtigung der Mehrwegeausbreitung; die Ausgangssignale beinhalten keine Richtungsinformation.

Für den Test einer Antennen-Empfängereinheit, insbesondere der adaptiven Ausrichtung der Antennenkeulen und Ausblendung von Störsignalen muss jedoch auch die Einfallsrichtung der Satellitensignale simuliert werden. Dies kann entweder mit Hilfe von verteilten Sendeantennen in einer großen reflexionsfreien Messkammer geschehen, oder durch eine zusätzliche Vorrichtung, in der die Phasenverschiebungen zwischen den einzelnen Antennenelementen entsprechend der Einfallsrichtung der Satellitensignale nachgebildet werden, d.h. in der für jedes Eingangssignal eine ebene Wellenfront erzeugt wird, die aus der Richtung des zugehörigen Satelliten einfällt. Die Empfangsantenne selbst wird dabei mitsimuliert und die simulierten Signale werden direkt in den Empfängereingang eingespeist.

Existierende Signalsimulatoren, z.B. der Spirent STR 4790 (STR 4790 Multi-Output GPS Signal Simulator Product Specification, MS3010, Spirent Communications), sind in der Lage, bis zu zwölf individuelle GPS-Satellitensignale auf zwei Trägerfrequenzen zu erzeugen. Diese Simulatoren wurden bisher auf zweifache Weise zum Test von Empfängern mit Gruppenantennen mit adaptiv steuerbarer Empfangscharakteristik eingesetzt.

Im ersten Fall wurden in einer großen reflexionsfreien Messkammer die HF-Ausgänge des Simulators mit einzelnen Sendeantennen verbunden, die in der Messkammer räumlich verteilt wurden. Die Empfangseinheit, also der Empfänger inklusive Gruppenantenne, wurde auf einem Drehstand platziert. Die Bewegung der Satelliten wurde vereinfacht durch Rotation des Drehstandes simuliert (N.J. Boasman, P. Briggs: "The Development of an Anechoic GPS Test Facility", Paper presented on ION National Conference, Albuquerque, NM, 24.-26. Juni 2002). Der Nachteil bei der Simulation mit Hilfe von verteilten Antennen in einer reflexionsfreien Messkammer besteht darin, dass zum einen eine relativ große Messkammer für Fernfeldmessungen notwendig ist, die eine Ausdehnung von mehreren Metern in jeder Richtung erreichen kann, und dass zum anderen eine Satellitenbewegung nur unvollkommen simuliert werden kann.

Im zweiten Fall wurden die HF-Ausgänge des Simulators auf eine analoge Vorrichtung gegeben, in der mit Hilfe von analogen Phasenschiebern und Dämpfungsgliedern, die ebenen Wellenfronten erzeugt wurden. Die Bewegung der Satelliten und des Nutzers wurden dabei durch Nachregelung der Phasenschieber und Dämpfungsglieder simuliert. Auf diese Weise konnten bis zu acht Antennenelemente am Ausgang bei sechzehn Eingangssignalen simuliert werden (D. Howell, D. Jacobs, B. Rahn, G. Green: "Virtual Flight Testing - A Versatile Approach to Evaluate Future GPS Anti-Jam Technologies", Proceedings of ION NTM 26.-28. Jan. 2000, Anaheim, CA, USA).

Der Nachteil einer analogen Vorrichtung zur Erzeugung der ebenen Wellenfronten besteht in dem hohen Hardwareaufwand für die Realisierung, der proportional zum Produkt der Ein- und Ausgangssignale ansteigt. Im Vergleich zu einer digitalen Lösung besitzt die analoge Variante eine wesentlich geringere Flexibilität, da Änderungen jeweils ein neues Hardware-Design erfordern. Eine zusätzliche Mehrwege-Kanalsimulation innerhalb dieser analogen Einheit ist nicht möglich.

Aus A. Hornbostel, A. Schroth, H. Denks, M. Holbrow: "A New Signal Simulation Tool for Testing of Receivers with Controlled Reception Pattern Antennas", ION 2004, Long Beach, 21.-24. Sept. 2004 und aus A. Hornbostel, A. Schroth, H. Denks, A. Konovaltsev, H. Venus, M. Holbrow: "A New Approach for Testing of Receivers with Controlled Reception Pattern Antennas", Proceedings of Navitec 2004, ESA/ESTEC, Noordwijk, 8.-10. Dezember 2004 ist ein digital arbeitendes Signal-Simulationswerkzeug zum Testen und Entwickeln von GNSS-Empfängern, insbesondere für GPS und das künftige Galileo, bekannt, die zum Ausrichten mehrerer unabhängiger Antennenkeulen auf verschiedene signalaussendende Funk-Sender und zur gleichzeitigen Unterdrückung von Störsignalen fähig sein sollen und dazu eine aus Elementen zusammengesetzte, adaptiv steuerbare Gruppenantenne aufweisen. Dieses bekannte Simulationswerkzeug, das auch auf dem bereits erwähnten Signalsimulator "Spirent STR 4790" beruht, enthält einen mehrere digitale Signale im komplexen Basisband erzeugenden Signalgenerator und einen Matrixprozessor.

Die Eingangssignale dieses Matrixprozessors sind die im Signalgenerator im komplexen Basisband erzeugten digitalen Signale und seine Ausgangssignale bilden die empfangenen Signale der einzelnen Elemente der Gruppenantenne des Funk-Empfängers. Die Eingangssignale des Matrixprozessors innerhalb dieses Matrixprozessors werden dabei im digitalen Bereich durch Phasenverschiebung entsprechend ihrer Einfallsrichtung und der relativen Positionen der Elemente innerhalb der Gruppenantenne des Funk-Empfängers moduliert. Die phasenverschobenen Signale werden dann kombiniert und auf die einzelnen Ausgänge des digitalen Matrixprozessors gegeben. Das Hauptmerkmal dieses Simulatorwerkzeugs ist mithin die Erzeugung einzelner digitaler Basisband-Satellitensignale, die mit Hilfe eines externen digitalen Matrixprozessors in die Eingangssignale der einzelnen Elemente einer Gruppenantenne umgewandelt werden können, wobei der Matrixprozessor für jedes Satellitensignal eine Wellenfronterzeugung ausführt, die von der Einfallsrichtung abhängt, und als Ausgangssignal die kombinierten Basisbandsignale für jedes Antennenelement abgibt.

Die Ausgangssignale des Matrixprozessors können entweder direkt in einen Basisband-Empfänger eingespeist werden oder zum Signalgenerator für eine Wandlung in HF-Signale rückgeführt werden. Dieses Simulationswerkzeug ermöglicht bereits das Testen und Entwickeln von Satellitennavigationsempfängern mit adaptiv steuerbarer Gruppenantenne zum Ausrichten mehrerer unabhängiger Antennenkeulen in einem kleinen Labor und erfordert keine große reflexionsfreie Messkammer.

Der vorliegenden Erfindung liegt nunmehr die Aufgabe zu Grunde, die zuletzt beschriebene Signal-Simulationseinrichtung vor allem im Hinblick auf den Matrixprozessor weiterzubilden sowie vorteilhaft auszugestalten und hierbei insbesondere detaillierte Maßnahmen zur Implementierung der Mehrwegesimulation im Matrixprozessor anzugeben.

Gemäß der vorliegenden Erfindung, die sich auf eine Signal-Simulationseinrichtung der eingangs genannten Art bezieht, wird diese Aufgabe in vorteilhafter Weise dadurch gelöst, dass der mit dem Signalgenerator kombinierte und synchronisierte digitale Matrixprozessor derart ausgebildet ist, dass darin durch eine komplexe Gewichtung seiner vom Signalgenerator kommenden Eingangssignale die von der Einfallsrichtung der Signale und der Position des dem Ausgang zugeordneten Elementes der Gruppenantenne des Empfängers abhängige Amplitude und Phasenverschiebung nachgebildet werden, wobei die Gewichtungskoeffizienten extern auf einem Steuerrechner berechnet werden und über eine Schnittstelle in den Matrixprozessor eingegeben werden, und dass zur Generierung von zusätzlichen Mehrwegesignalen innerhalb des digitalen Matrixprozessors eine Einrichtung zur zusätzlichen Faltung der Eingangssignale mit der Impulsantwort eines Mehrwegekanals vorgesehen ist, wobei die Koeffizienten der Impulsantwort mittels eines vektoriellen Kanalmodells berechnet werden.

Die Erfindung beruht in Anwendung beispielsweise für zu testende oder zu entwickelnde Satellitennavigationsempfänger mit adaptiv gesteuerten Antennenkeulen auf einer digitalen Prozessierungseinheit, die es gestattet, in Verbindung mit einem Satellitensignalgenerator für jedes Satelliten-Eingangssignal die ebenen Wellenfronten durch eine komplexe Gewichtung im Basisband auf digitaler Ebene zu erzeugen und gleichzeitig die Generierung von zusätzlichen Mehrwegesignalen über ein vektorielles Kanalmodell zu ermöglichen. Die digitale Prozessierungseinheit ist in Form eines digitalen Matrixprozessors aufgebaut, dessen Eingangssignale die von dem Signalgenerator erzeugten individuellen Satellitensignale im komplexen Basisband in digitaler Form sind und dessen Ausgangssignale die empfangenen Signale der einzelnen Elemente der die Antennenkeulen erzeugenden Gruppenantenne ebenfalls im komplexen Basisband bilden.

Die Eingangssignale werden innerhalb des Matrixprozessors kombiniert und auf die einzelnen Ausgänge gegeben, wobei zuvor durch eine komplexe Gewichtung der Eingangssignale innerhalb des Matrixprozessors die von der Einfallsrichtung der Signale und der Position des dem Ausgang zugeordneten Antennenelementes abhängige Amplitude und Phasenverschiebung nachgebildet werden. Die Gewichtungskoeffizienten werden dabei extern auf einem Steuerrechner berechnet und über eine Schnittsstelle in den Matrixprozessor eingegeben. Zur Generierung der Mehrwegesignale werden innerhalb des digitalen Matrixprozessors die Eingangssignale zusätzlich mit der Impulsantwort eines Mehrwegekanals gefaltet. Die Koeffizienten der Impulsantwort werden dabei mittels eines Kanalmodells entweder direkt innerhalb des Matrixprozessors, mit Hilfe eines externen digitalen Signalprozessors oder auf dem externen Steuerrechner berechnet.

Die digitalen Ausgangssignale des Matrixprozessors können entweder direkt in einem digitalen Basisbandempfänger verarbeitet werden oder aber wieder in analoge Signale umgewandelt, hochgemischt und in den ZF- oder HF-Teil des Empfängers eingespeist werden.

Ein vorteilhaftes Anwendungsgebiet für die Signal-Simulationseinrichtung nach der Erfindung besteht insbesondere als Zusatzmodul von GPS-/Galileo-Signalsimulatoren.

Vorteilhafte und zweckmäßige Weiterbildungen der Signal-Simulationseinrichtung nach der vorliegenden Erfindung sind in den sich unmittelbar oder mittelbar auf den Patentanspruch 1 rückbeziehenden Unteransprüchen angegeben.

Die Erfindung wird im Folgenden anhand von durch Zeichnungen veranschaulichten Ausführungsbeispielen von Signal-Simulationseinrichtungen erläutert. Es zeigen:
- Fig.1: in einem Blockschaltbild das Prinzip eines digitalen Wellenfront-Matrixprozessors in Verbindung mit einem digitalen Signalgenerator und einem zu testenden Empfänger,
- Fig.2: in einer schematischen Darstellung die Rückführung der digitalen Basisbandsignale aus dem digitalen Matrixprozessor und die Generierung von analogen Hochfrequenzsignalen im Signalgenerator und anschließende HF-Aufwärtsmischung,
- Fig.3: in einer Blockschaltbilddarstellung eine Mehrwegekanalsimulation mit festen Verzögerungen und variablen Koeffizienten unter Verwendung einer angezapften Verzögerungsleitung (tapped delay line) gemäß der vorliegenden Erfindung, und
- Fig.4: in einer Blockschaltbilddarstellung das erfindungsgemäße Prinzip eines erweiterten digitalen Wellenfront-Matrixprozessors mit integrierter MehrwegeVektorkanalsimulation in Verbindung mit einem Personal Computer, einem digitalen Signalgenerator und einem zu testenden Empfänger

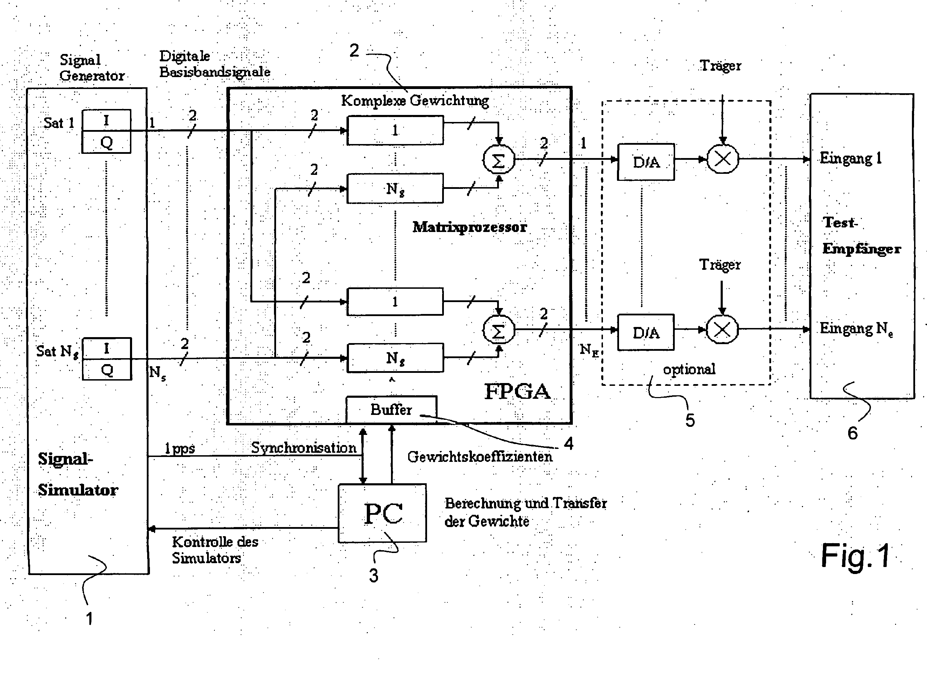

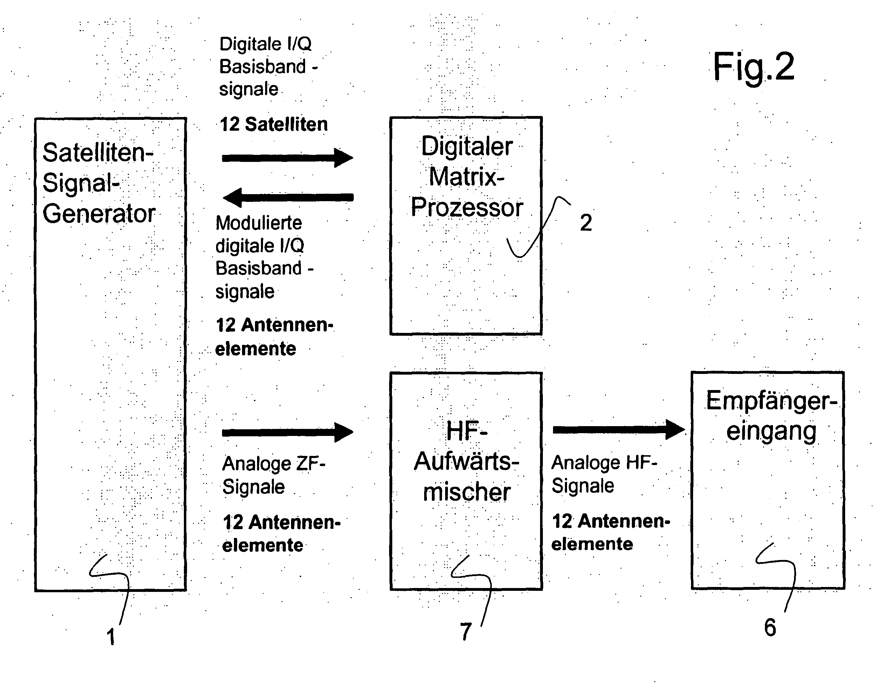

Anhand von Fig.1 und Fig.2 wird nun eine mit einer Satellitensignal-Simulationseinrichtung nach der Erfindung durchgeführte Wellenfrontgenerierung beschrieben.

Die mittels eines Signalgenerators 1 reproduzierbar erzeugten digitalisierten komplexen Basisbandsignale (1,...,Nₛ) mehrerer Satelliten Sat 1 bis Sat Nₛ werden jeweils getrennt nach Inphase- und Quadratur-Kanal I bzw. Q in einen z.B. aus einem oder mehreren FPGAs (Field Programmable Gate Arrays; frei programmierbare Logikschaltkreise) aufgebauten digitalen Matrixprozessor 2 eingespeist und dort mit unterschiedlichen Gewichtsfaktoren komplex multipliziert, was bei geeigneter Wahl der Gewichtsfaktoren einer Amplitudeneinstellung und einer Verschiebung der Trägerphase entspricht. Anschließend werden die Signale zusammengefasst, d.h. addiert, und als digitale Signale wiederum aufgetrennt nach Inphase- und Quadraturkomponente I bzw. Q an Ausgängen ausgegeben.

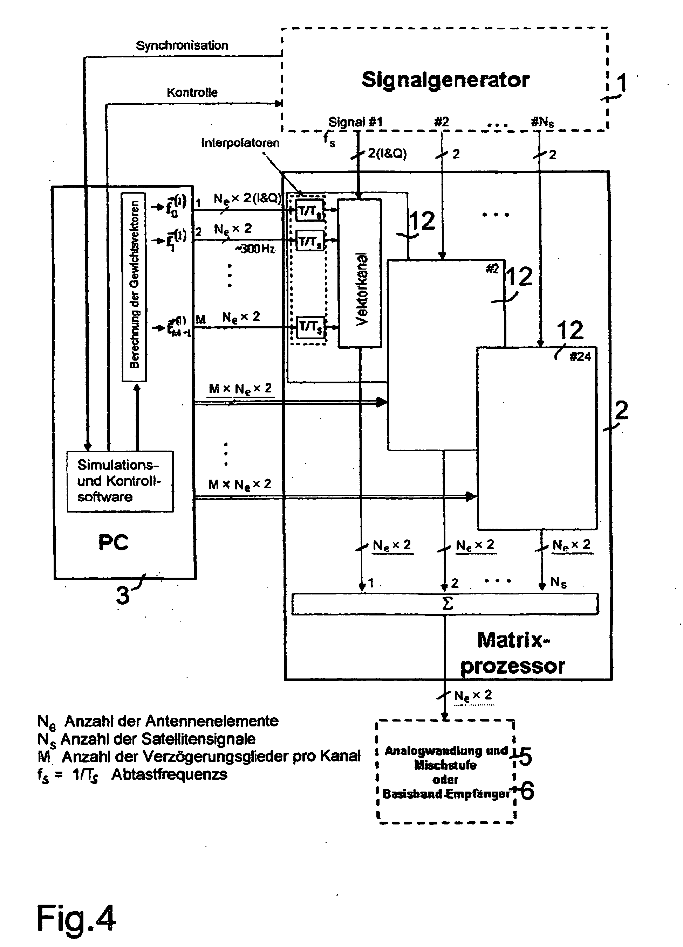

Der Matrixprozessor 2 besitzt dabei mehrere solcher Ausgänge und zwar jeweils einen für jedes zu simulierende Antennenelement einer Gruppenantenne eines Testempfängers 6. Die Ausgangssignale (1,...,Nₑ) an diesen Ausgängen entsprechen dann der Summe aller Satellitensignale und eventuell im Matrixprozessor 2 zusätzlich erzeugter reflektierter Signale (siehe Fig.4) an den Ausgängen mehrerer Elemente der Gruppenantenne nach dem Heruntermischen ins Basisband und der Digitalisierung. Für jedes Eingangssignal (1,...,Nₛ) und für jedes Ausgangsignal (1,...,Nₑ) werden dabei unterschiedliche Sätze von Gewichtskoeffizienten berechnet, die sich aus der vorgegebenen Einfallsrichtung der Satellitensignale und gegebenenfalls der reflektierten Signale und der Position des Antennenelementes ergeben, d. h. für jedes Eingangssignal und intern erzeugtes reflektiertes Signal wird eine ebene Wellenfront erzeugt, die aus der Richtung des abstrahlenden Satelliten oder des letzten Reflexionspunktes einfällt.

Die Berechnung der Koeffizienten für die Satellitensignale erfolgt im Beispiel auf einem Personal Computer (PC) 3 in Abhängigkeit von der simulierten Satellitenposition und der vorgegebenen Position und Ausrichtung der Nutzerantennen, von wo sie über eine Daten-Schnittstelle, beispielsweise eine USB-Schnittstelle, in einen Zwischenspeicher (Buffer) 4, der hier Teil des Matrixprozessors 2 ist, eingespeist werden. Der Zwischenspeicher 4 ist zum mit den Eingangssignalen synchronen Einlesen der Gewichtskoeffizienten in den Matrixprozessor 2 notwendig. Er entkoppelt den asynchronen Koeffizienten-Datenübertragungsprozess vom Personal Computer 3 in den Matrixprozessor 2 vom synchronen Echtzeit-Matrixmultiplikationsprozess. Die Orbits werden dabei von der Steuersoftware des Satellitensignalgenerators 1, die ebenfalls auf dem Personal Computer 3 läuft, geliefert.

Die Berechnung der Gewichtskoeffizienten kann in einem Vorauslauf vor dem eigentlichen Simulationslauf, in dem dann die vorausberechneten Gewichtskoeffizienten nur noch übertragen werden, erfolgen. Das Auslesen des Zwischenspeichers 4 und der Datentransfer vom Personal Computer 3 werden dabei über ein 1-PPS-Signal (1 Puls Pro Sekunde) synchronisiert, das vom Satellitensignalgenerator 1 geliefert wird und mit dem wesentlich höheren Takt der digitalen Basisbandsignale synchron ist, der über die Basisbandeingänge ebenfalls an den Matrixprozessor 2 übertragen wird. Die Ausgangssignale (1,...,Nₑ) des Matrixprozessors 2 können entweder direkt als Basisbandsignale in einen Testempfänger 6 eingespeist werden oder in einer dem Testempfänger 6 vorgeschalteten Einheit 5 zur Digital/Analog-Wandlung und Aufwärtsmischung zuvor digital-analog gewandelt und auf einen Zwischenfrequenz-Träger oder Hochfrequenz-Träger moduliert werden.

Die Einheit 5 ist dabei zweckmäßigerweise wieder Teil des Satellitensignalgenerators 1, siehe Fig.2. In Fig.2, in der zwölf im Satellitensignalgenerator 1 erzeugte Satellitensignale und zwölf Antennenelemente in der Gruppenantenne des Testempfängers 6 vorgesehen sind, werden die einem ZF-Träger aufmodulierten analogen Ausgangssignale dann dem Satellitensignalgenerator 1 entnommen und mittels eines eigenen HF-Aufwärtsmischers 7 in die HF-Lage gebracht und danach als analoge HF-Signale an den HF-Empfängereingang des Testempfängers 6 geführt.

Die digitale Realisierung ist gegenüber einem analogen Matrixprozessor besonders dann vorteilhaft, wenn eine große Anzahl von Ein- und Ausgangssignalen verarbeitet werden soll, da mehrere hundert Matrixelemente implementiert werden können. Gleichzeitig besitzt die digitale Realisierung eine wesentlich größere Flexibilität gegenüber analogen Formen, da z.B. neue Matrixstrukturen durch Umprogrammierung der FPGAs implementiert werden können. Durch die digitale Gewichtung der Signale auch mit hohen Auffrischungsraten von 100 Hz oder mehr bei der Berechnung der Gewichtskoeffizienten können weitere Effekte, wie z.B. schnelle Signalschwankungen (Szintillationen) oder Fading für schnellbewegliche Nutzer simuliert werden.

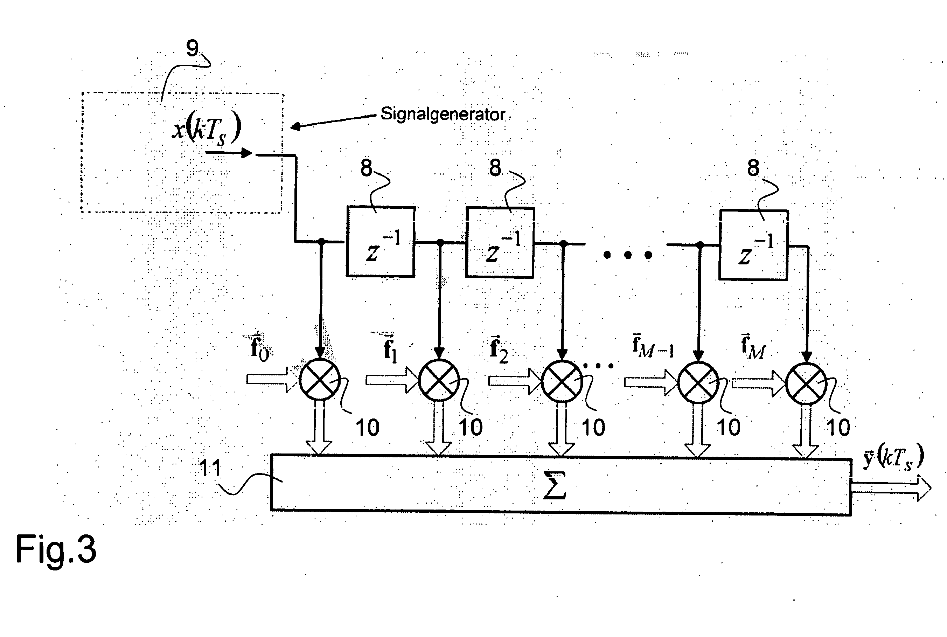

Für die Durchführung einer Mehrwegekanalsimulation, die für die Signal-Simulationseinrichtung nun anhand von Fig.3 erläutert werden soll, ist es vorteilhaft, die Faltung des Eingangssignals mit der Impulsantwort des Mehrwegekanals über eine angezapfte Verzögerungsleitung (tapped delay line) mit festen Verzögerungsgliedern 8 und variablen Koeffizienten zu realisieren. Dabei wird ein WSSUS(Wide-Sense Stationary Uncorrelated Scattering)-Kanalmodell zu Grunde gelegt, wie es beispielsweise im Aufsatz von Bello, P.A.. "Characterization of Randomly Time-Variant Linear Channels" in IEEE Trans. on Communications Systems, Seiten 360 bis 393, Dezember 1963 beschrieben ist.

Für die Implementierung müssen Reihen von taktweisen Signalverzögerungen im FPGA bzw. in den FPGAs implementiert werden. Das Ausgangssignal des Signalgenerators 9 und die Ausgangssignale jedes dieser Verzögerungsglieder 8 werden dann individuell in Multiplizierern 10 gewichtet und in einem Summierer 11 summiert. Die Struktur entspricht der Implementierung eines FIR(Finite Impulse Response)-Filters. Zu beachten ist, dass das Ausgangssignal des Signalgenerators 9 und die Ausgangssignale der einzelnen Verzögerungsglieder 8 mit Gewichtsvektoren f̅ deren Elementezahl der Anzahl der Antennenelemente der Gruppenantenne des Testempfängers entspricht, multipliziert werden.

Die Anzahl M der Verzögerungsglieder 8 ist größer als die Anzahl der Echos und ergibt sich aus der Länge der Impulsantwort und der Signalbandbreite, der Länge der maximalen Verzögerung und der Signalabtastrate. Zur Erzeugung eines Vektorkanals, müssen Nₑ solcher Strukturen erzeugt werden, wobei Nₑ die Anzahl der Antennenelemente der Gruppenantenne ist. Die komplexen Elemente aller Gewichtsvektoren f̅ sind die Abtastwerte der vektoriellen Impulsantwort des Mehrwegekanals. Sie beinhalten sowohl die Information für eine Kanalimpulsantwort als auch die Richtungsinformation über die einzelnen Eingangssignale.

Anhand von Fig.4 wird nachfolgend ein vollständiger Matrixprozessor 2 mit Vektorkanalsimulation und Wellenfrontgenerierung einer Signal-Simulationseinrichtung gemäß der Erfindung beschrieben.

Die Zusammenschaltung von Signalsimulator 1, digitalem Matrixprozessor 2, Personal Computer (PC) 3, Digital/Analogwandlung und Mischstufe 5 und Testempfänger 6 entspricht derjenigen von Fig.1. Der Matrixprozessor 2 ist jedoch um jeweils einem Eingangssignal (1,...,Nₛ) zugeordnete Vektorkanalmodule 12 erweitert. Jeder Vektorkanalmodul 12 besteht aus Nₑ FIR-Filtern entsprechend Fig.3. Auf dem Personal Computer 3 werden jetzt nicht nur die Gewichtskoeffizienten, sondern auch die Gewichtsvektoren f̅ berechnet.

Die Länge dieser Gewichtsvektoren f̅ d.h. die Anzahl der komplexen Elemente jedes Gewichtsvektors f̅ ist gleich der Anzahl der Antennenelemente. Ein kompletter Satz mit *M* solchen Vektoren muss für jedes Antennenelement der Gruppenantenne des Testempfängers 6 und unter Berücksichtigung jedes Eingangssignals (1,...,Nₛ) erzeugt werden, wobei *M* die Anzahl der Glieder des FIR-Filters ist.

Die Signal-Simulationseinrichtung zum Testen und Entwickeln von Funk-Empfängern gemäß der vorliegenden Erfindung zeichnet sich also durch die zweckmäßige Kombination eines digitalen Matrixprozessors zur Wellenfrontgenerierung, welcher aus Gewichtung und Kombination der individuellen Satelliteneingangssignale die Ausgangssignale einzelner Elemente einer Gruppenantenne erzeugt, mit der zusätzlichen internen Generierung von Mehrwegesignalen mit Hilfe eines vektoriellen Kanalmodells aus.

Gegenüber existierenden Lösungen der Wellenfrontgenerierung aus den analogen Hochfrequenzsignalen wird bei der Signal-Simulationseinrichtung zum Testen und Entwickeln von Funk-Empfängern gemäß der vorliegenden Erfindung die Wellenfrontgenerierung durch eine komplexe Gewichtung der Basisbandsignale realisiert. Dadurch wird eine digitale Implementierung möglich, da die Basisbandsignale auch mit relativ großen Bandbreiten (ca. 50 MHz) mit ausreichender Abtastrate (50 - 100 MHz bei Abtastung von I- und Q-Kanal) digital erzeugt werden können. Vorteile der digitalen Realisierung sind eine hohe Flexibilität und die Möglichkeit zur Realisierung großer Matrizen mit vielen Ein- und Ausgängen. Durch die digitale Realisierung wird die zusätzliche Implementierung einer vektoriellen Kanalsimulation gemäß der Erfindung erst möglich.

Die Signal-Simulationseinrichtung zum Testen und Entwickeln von Funk-Empfängern gemäß der vorliegenden Erfindung zeichnet sich auch durch eine neuartige Rückspeisung der Ausgangssignale der digitalen Wellenfrontmatrix in den Satellitensignalgenerator zur Generierung von Hochfrequenzsignalen aus. Der Satellitensignalgenerator muss dazu die entsprechenden Ein- und Ausgänge im Basisband besitzen.

### Bezugszeichenliste

- 1: Signalgenerator
- 2: Matrixprozessor
- 3: Personal Computer (PC); Steuerrechner
- 4: Zwischenspeicher (Buffer)
- 5: Einheit zur Digital/Analog-Wandlung und Mischung
- 6: Empfänger; Testempfänger
- 7: HF-Aufwärtsmischer
- 8: Verzögerungsglied
- 9: Signalgenerator
- 10: Multiplizierer
- 11: Summierer
- 12: Vektorkanalmodul
- f̅: Gewichtsvektoren
- fₛ=1/Tₛ: Abtastfrequenz
- I: In-Kanal
- M: Anzahl der Verzögerungsglieder pro Kanal
- Nₑ: Anzahl der Antennenelemente
- Nₛ: Anzahl der Satellitensignale
- Q: Quadratur-Kanal

## Patentansprüche

1. Signal-Simulationseinrichtung zum Testen und Entwickeln von Funk-Empfängern, insbesondere Satellitennavigationsempfängern, die zum Ausrichten mehrerer unabhängiger Antennenkeulen auf verschiedene signalaussendende Funk-Sender und zur gleichzeitigen Unterdrückung von Störsignalen fähig sein sollen und dazu eine aus Elementen zusammengesetzte, adaptiv steuerbare Gruppenantenne aufweisen, unter Verwendung eines mehrere reproduzierbare digitale Signale im komplexen Basisband erzeugenden Signalgenerators und eines Matrixprozessors, dessen Eingangssignale die im Signalgenerator im komplexen Basisband erzeugten digitalen Signale sind und dessen Ausgangssignale die empfangenen Signale der einzelnen Elemente der Gruppenantenne des Funk-Empfängers bilden, wobei die Eingangssignale des Matrixprozessors innerhalb dieses Matrixprozessors im digitalen Bereich durch Phasenverschiebung entsprechend ihrer Einfallsrichtung und der relativen Positionen der Elemente innerhalb der Gruppenantenne des Funk-Empfängers moduliert und die phasenverschobenen Signale kombiniert und auf die einzelnen Ausgänge des Matrixprozessors gegeben werden, **dadurch gekennzeichnet, dass** der mit dem Signalgenerator kombinierte und synchronisierte digitale Matrixprozessor (2) derart ausgebildet ist, dass darin durch eine komplexe Gewichtung seiner vom Signalgenerator (1) kommenden Eingangssignale die von der Einfallsrichtung der Signale und der Position des dem Ausgang zugeordneten Elementes der Gruppenantenne des Empfängers (6) abhängige Amplitude und Phasenverschiebung nachgebildet werden, wobei die Gewichtungskoeffizienten extern auf einem Steuerrechner (3) berechnet werden und über eine Schnittstelle in den Matrixprozessor eingegeben werden, und dass zur Generierung von zusätzlichen Mehrwegesignalen innerhalb des digitalen Matrixprozessors eine Einrichtung zur zusätzlichen Faltung der Eingangssignale mit der Impulsantwort eines Mehrwegekanals vorgesehen ist, wobei die Koeffizienten der Impulsantwort mittels eines vektoriellen Kanalmodells berechnet werden.

2. Signal-Simulationseinrichtung nach Anspruch 1, **dadurch gekennzeichnet, dass** zur Berechnung der Gewichtungskoeffizienten ein externer Steuerrechner (3) vorgesehen ist, der über eine Daten-Schnittsstelle mit dem Matrixprozessor (2) verbunden ist.

3. Signal-Simulationseinrichtung nach Anspruch 2, **dadurch gekennzeichnet, dass** der externe Steuerrechner (3) ein Personal Computer ist.

4. Signal-Simulationseinrichtung nach Anspruch 2, **dadurch gekennzeichnet, dass** die Daten-Schnittstelle eine USB-Schnittstelle ist.

5. Signal-Simulationseinrichtung nach einem der Ansprüche 2 bis 4, **dadurch gekennzeichnet, dass** zum synchronen Einlesen der Gewichtskoeffizienten in den Matrixprozessor (2) ein Zwischenspeicher (4) vorgesehen ist, der über die Daten-Schnittstelle mit dem Steuerrechner (3) verbunden ist und dafür sorgt, dass der asynchrone Koeffizienten-Datenübertragungsprozess vom Steuerrechner in den Matrixprozessor vom synchronen Echtzeit-Matrixmultiplikationsprozess entkoppelt ist.

6. Signal-Simulationseinrichtung nach Anspruch 5, **dadurch gekennzeichnet, dass** der Zwischenspeicher (4) ein Teil des Matrixprozessors (2) ist.

7. Signal-Simulationseinrichtung nach Anspruch 1, **dadurch gekennzeichnet, dass** die Koeffizienten der vektoriellen Impulsantwort mittels eines vektoriellen Kanalmodells direkt innerhalb des Matrixprozessors (2) berechnet werden.

8. Signal-Simulationseinrichtung nach Anspruch 1, **dadurch gekennzeichnet, dass** die Koeffizienten der vektoriellen Impulsantwort mittels eines vektoriellen Kanalmodells mit Hilfe eines externen digitalen Signalprozessors berechnet werden.

9. Signal-Simulationseinrichtung nach Anspruch 1, **dadurch gekennzeichnet, dass** die Koeffizienten der vektoriellen Impulsantwort mittels eines vektoriellen Kanalmodells auf dem externen Steuerrechner (3) berechnet werden.

10. Signal-Simulationseinrichtung nach Anspruch 1, **dadurch gekennzeichnet, dass** die digitalen Ausgangssignale des Matrixprozessors (2) direkt in einem digitalen Basisbandempfängerteil des Empfängers (6) verarbeitet werden.

11. Signal-Simulationseinrichtung nach Anspruch 1, **dadurch gekennzeichnet, dass** die digitalen Ausgangssignale des Matrixprozessors (2) mittels einer Einheit (5) zur Digital/Analog-Wandlung und Aufwärtsmischung in analoge Signale umgewandelt, aufwärtsgemischt und in einen ZF- oder HF-Teil des Empfängers (6) eingespeist werden.

12. Signal-Simulationseinrichtung nach einem der vorhergehenden Ansprüche, **dadurch gekennzeichnet, dass** der digitale Matrixprozessor (2) aus einem oder mehreren FPGAs (Field Programmable Gate Arrays; frei programmierbare Logikschaltkreise) aufgebaut ist.

13. Signal-Simulationseinrichtung nach Anspruch 1, **dadurch gekennzeichnet, dass** für jedes Eingangssignal (1,...,Nₛ) und für jedes Ausgangsignal (1,...,Nₑ) des Matrixprozessors (2) unterschiedliche Sätze von Gewichtskoeffizienten berechnet werden, die sich aus der vorgegebenen Einfallsrichtung der direkt einfallenden Signale und der reflektierten Signale und der Position des Antennenelementes ergeben, d. h. für jedes Eingangssignal und intern erzeugtes reflektiertes Signal wird eine ebene Wellenfront erzeugt, die aus der Richtung des direkt einfallenden Signals oder des letzten Reflexionspunktes des reflektierten Signals einfällt, wobei die Berechnung der Koeffizienten für die Signale auf dem Steuerrechner (3) in Abhängigkeit von der Signalabgabeposition und der vorgegebenen Position und Ausrichtung der Gruppenantennenkeulen erfolgt.

14. Signal-Simulationseinrichtung nach Anspruch 1, **dadurch gekennzeichnet, dass** die Berechnung der Gewichtskoeffizienten im Steuerrechner (3) in einem Vorauslauf vor dem eigentlichen Simulationslauf erfolgt, in dem dann die vorausberechneten Gewichtskoeffizienten nur noch übertragen werden.

15. Signal-Simulationseinrichtung nach Anspruch 5, **dadurch gekennzeichnet, dass** das Auslesen des Zwischenspeichers (4) und der Datentransfer vom Steuerrechner (3) über ein 1-PPS(Puls Pro Sekunde)-Signal synchronisiert sind, das vom Signalgenerator (1) geliefert wird und mit einem wesentlich höheren Takt der digitalen Basisbandsignale synchron ist, der über die Basisbandeingänge ebenfalls an den Matrixprozessor (2) übertragen wird.

16. Signal-Simulationseinrichtung nach Anspruch 1, **dadurch gekennzeichnet, dass** die Faltung mit der vektoriellen Impulsantwort des Mehrwegekanals über eine angezapfte Verzögerungsleitung (tapped delay line) mit festen Verzögerungsgliedern (8) und variablen Koeffizienten realisiert ist, wobei ein WSSUS(Wide-Sense Stationary Uncorrelated Scattering)-Kanalmodell zu Grunde gelegt wird, dass das Ausgangssignal des Signalgenerators (9) und die Ausgangssignale jedes dieser Verzögerungsglieder (8) individuell in Multiplizierern (10) gewichtet und in einem Summierer (11) summiert werden, wobei die Struktur der Implementierung eines FIR(Finite Impulse Response)-Filters entspricht, dass das Ausgangssignal des Signalgenerators (9) und die Ausgangssignale der einzelnen Verzögerungsglieder (8) mit Gewichtsvektoren (f̅), deren Elementezahl der Anzahl der Antennenelemente der Gruppenantenne des Testempfängers (6) entspricht, multipliziert werden, wobei die Anzahl (*M*) der Verzögerungsglieder (8) größer als die Anzahl der Echos ist und sich aus der Länge der Impulsantwort und der Signalbandbreite, der Länge der maximalen Verzögerung und der Signalabtastrate ergibt, dass zur Erzeugung eines Vektorkanals Nₑ solcher Strukturen erzeugt werden, wobei Nₑ die Anzahl der Antennenelemente der Gruppenantenne ist, und dass die komplexen Elemente aller Gewichtsvektoren (f̅) die Abtastwerte der vektoriellen Impulsantwort des Mehrwegekanals sind und sowohl die Information für eine Kanalimpulsantwort als auch die Richtungsinformation über die einzelnen Eingangssignale beinhalten.

17. Signal-Simulationseinrichtung nach Anspruch 16 und 12, **dadurch gekennzeichnet, dass** zur Realisierung der Verzögerungsglieder (8) Reihen von taktweisen Signalverzögerungen im FPGA (Field Programmable Gate Array; frei programmierbarer Logikschaltkreis) bzw. in den FPGAs implementiert sind.

18. Signal-Simulationseinrichtung nach Anspruch 16, **dadurch gekennzeichnet, dass** zur Realisierung einer integrierten Mehrwege-Vektorkanalsimulation der Matrixprozessor (2) um jeweils einem Eingangssignal (1,...,Nₛ) zugeordnete Vektorkanalmodule (12) erweitert ist, wobei jeder Vektorkanalmodul aus Nₑ FIR-Filtern besteht, dass auf dem Steuerrechner (3) nicht nur die Gewichtskoeffizienten, sondern auch die Gewichtsvektoren (f̅) berechnet werden, wobei die Länge dieser Gewichtsvektoren (f̅), d.h. die Anzahl der komplexen Elemente jedes Gewichtsvektors (f̅), gleich der Anzahl der Antennenelemente ist, und dass ein kompletter Satz mit *M* solchen Gewichtsvektoren für jedes Antennenelement der Gruppenantenne des Empfängers (6) und unter Berücksichtigung jedes Eingangssignals (1,...,Nₛ) erzeugt wird, wobei M die Anzahl der Glieder des FIR-Filters ist.

19. Verwendung der Signal-Simulationseinrichtung nach einem der vorhergehenden Ansprüche im Rahmen eines GPS-Satellitensignalsimulators.

20. Verwendung der Signal-Simulationseinrichtung nach einem der vorhergehenden Ansprüche im Rahmen eines Galileo-Satellitensignalsimulators.

## Claims

1. A signal simulation device for the testing and development of radio receivers, particularly of satellite navigation receivers, which are desired to be capable of directing a plurality of independent antenna lobes to different signal-emitting radio transmitters while simultaneously suppressing disturb signals and which, for this purpose, comprise an adaptively controllable array antenna composed of elements, by use of a signal generator generating a plurality of reproducible digital signals in the complex baseband, and of a matrix processor, the input signals of the matrix processor being said digital signals generated in the complex baseband by means of the signal generator, and the output signals thereof being the received signals of the individual elements of the array antenna of the radio receiver, the input signals of the matrix processor being modulated, within this matrix processor, in the digital range by phase shifting corresponding to their direction of incidence and the relative positions of the elements within the array antenna of the radio receiver, and the phase-shifted signals being combined and applied to the individual output terminals of the matrix processor,
**characterized in that** the digital matrix processor (2) combined and synchronized with the signal processor is configured in such a manner that, therein, the amplitude and the phase shift which are dependent on the direction of incidence of the signals and the position of that element of the array antenna of the radio receiver (6) which is assigned to the output terminal, are copied by means of complex weighting of the input signals thereof coming from the signal generator (1), the weighting coefficients being externally computed by a control computer (3) and being input into the matrix processor via an interface, and that, for generating additional multi-path signals, within the digital matrix processor a device is provided for additional convolution of the input signals with the pulse response of a multi-path channel, the coefficients of the pulse response being computed by means of a vectorial channel model.

2. The signal simulation device according to claim 1, **characterized in that**, for computing the weighting coefficients, an external control computer (3) is provided which is connected to the matrix processor (2) via a data interface.

3. The signal simulation device according to claim 2, **characterized in that** the external control computer (3) is a personal computer.

4. The signal simulation device according to claim 2, **characterized in that** the data interface is a USB interface.

5. The signal simulation device according to any one of claims 2 to 4,
**characterized in that**, for synchronous reading of the weighting coefficients into the matrix processor (2), an intermediate store (4) is provided which is connected via the data interface to the control computer (3) and is operative to the effect that the process of asynchronous coefficient data transmission out of the control computer into the matrix processor is decoupled from the synchronous real-time matrix multiplication process.

6. The signal simulation device according to claim 5, **characterized in that** the intermediate store (4) is a part of the matrix processor (2).

7. The signal simulation device according to claim 1, **characterized in that** the coefficients of the vectorial pulse response are computed directly within the matrix processor (2) using a vectorial channel model.

8. The signal simulation device according to claim 1, **characterized in that** the coefficients of the vectorial pulse response are computed using a vectorial channel model with the aid of an external digital signal processor.

9. The signal simulation device according to claim 1, **characterized in that** the coefficients of the vectorial pulse response are computed using a vectorial channel model by means of the external control computer (3).

10. The signal simulation device according to claim 1, **characterized in that** the digital output signals of the matrix processor (2) are processed directly in a digital baseband receiver portion of the receiver (6).

11. The signal simulation device according to claim 1, **characterized in that**, by means of a unit (5) for digital/analog conversion and upward mixing, the digital output signals of the matrix processor (2) are converted into analog signals, mixed upward and fed to a ZF or HF portion of the receiver (6).

12. The signal simulation device according to any one of the preceding claims, **characterized in that** the digital matrix processor (2) comprises one or several FPGAs (Field Programmable Gate Arrays).

13. The signal simulation device according to claim 1, **characterized in that**, for each input signal (1, ..., Nₛ) and for each output signal (1, ..., Nₑ) of the matrix processor (2), different sets of weighting coefficients are computed which result from the predetermined direction of incidence of the directly incident signals and the reflected signals and from the position of the antenna elements, i.e. for each input signal and internally generated reflected signal, a plane wavefront is generated which is incident from the direction of the directly incident signal or the last reflection point of the reflected signal, the computation of the coefficients for the signals being performed by the control computer (3) in dependence on the signal output position and the predetermined position and orientation of the array antenna lobes.

14. The signal simulation device according to claim 1, **characterized in that** the computation of the weighting coefficients in the control computer (3) is performed in a preliminary run prior to the actual simulation run in which the precalculated weighting coefficients are only transmitted.

15. The signal simulation device according to claim 5, **characterized in that** the reading from the intermediate store (4) and the data transfer from the control computer (3) are synchronized by a 1 PPS (Pulse Per Second) signal which is supplied by the signal generator (1) and is synchronous with a substantially higher cycle of the digital baseband signals which, via the baseband input terminals, is also transmitted to the matrix processor (2).

16. The signal simulation device according to claim 1, **characterized in that** the convoluting with the vectorial pulse response of the multi-path channel is realized by a tapped delay line with fixed delay sections (8) and variable coefficients, the process being based on a WSSUS (Wide Sense Stationary Uncorrelated Scattering) channel model, that the output signal of the signal generator (9) and the output signals of each of said delay sections (8) are individually weighted in multipliers (10) and are added in a summator (11), the structure corresponding to the implementation of an FIR (Finite Impulse Response) filter, that the output signal of the signal generator (9) and the output signals of the individual delay sections (8) are multiplied by weighting factors (f̅), with the number of the elements of said factors corresponding to the number of the antenna elements of the array antenna of the test receiver (6), the number (*M*) of the delay sections (8) being larger than the number of echoes and resulting from the length of the pulse response, the signal bandwidth, the length of the maximum delay and the signal scan rate, that, for generating a vector channel, Nₑ structures of this type are generated, Nₑ being the number of antenna elements of the array antenna, and that the complex elements of all weighting factors (f̅) are the scan factors of the vectorial pulse response of the multipath channel and include both the information for a channel pulse response and the direction information on the individual input signals.

17. The signal simulation device according to claims 16 and 12, **characterized in that**, for realization of the delay segments (8), rows of synchronized signal delays are implemented in the FPGA (Field Programmable Gate Array) and the FPGAs, respectively.

18. The signal simulation device according to claim 16, **characterized in that**, for realization of an integrated multi-path vector channel simulation, the matrix processor (2) is extended by vector channel modules (12) assigned to respectively one input signal (1, ..., Nₛ), each vector channel module consisting of a number Nₑ of FIR filters, that, by the control computer (3), not only the weighting coefficients but also the weighting vectors (f̅) are computed, the length of these weighting vectors (f̅), i.e. the number of complex elements of each weighting vector (f̅), being equal to the number of antenna elements, and that a complete set comprising a number of M of such weighting vectors is generated for each antenna element of the array antenna of the receiver (6) and under consideration of each input signal (1, ..., Nₛ), with M being the number of the segments of the FIR filter.

19. Use of a signal simulation device according to any one of the preceding claims within a GPS satellite signal simulator.

20. Use of a signal simulation device according to any one of the preceding claims within a Galileo satellite signal simulator.

## Revendications

1. Dispositif de simulation de signaux destiné à tester et développer des récepteurs radio, en particulier des récepteurs de navigation par satellite, qui doivent être capables d'orienter plusieurs lobes de rayonnement d'antenne indépendants sur différents émetteurs radio émettant des signaux et d'atténuer simultanément des signaux parasites, et qui présentent en outre une antenne réseau à commande adaptative, constituée de plusieurs éléments, grâce à l'utilisation d'un générateur de signaux générant plusieurs signaux numériques reproductibles dans la bande de base complexe et d'un processeur matriciel, dont les signaux d'entrée qui sont les signaux numériques générés par le générateur de signaux dans la bande de base complexe, et dont les signaux de sortie qui forment les signaux de réception des éléments individuels de l'antenne réseau du récepteur radio, les signaux d'entrée du processeur matriciel étant modulés dans ce processeur matriciel dans le domaine numérique par décalage de phases de manière correspondante à leur direction d'incidence et aux positions relatives des éléments dans l'antenne réseau du récepteur radio et les signaux déphasés étant combinés et transmis sur les sorties individuelles du processeur matriciel, **caractérisé en ce que** le processeur matriciel numérique (2) synchronisé et combiné avec le générateur de signaux est conçu de telle sorte que le décalage de phases et l'amplitude dépendant de la direction d'incidence des signaux et de la position de l'élément associé à la sortie de l'antenne réseau du récepteur (6) soient simulés dans celui-ci par une pondération complexe de ses signaux d'entrée provenant du générateur de signaux (1), les coefficients de pondération étant calculés de manière externe par un ordinateur de commande (3) et introduits dans le processeur matriciel par l'intermédiaire d'une interface, et pour la génération de signaux à plusieurs voies dans le processeur matriciel numérique, on prévoit un dispositif pour la convolution supplémentaire des signaux d'entrée avec la réponse impulsionnelle d'un canal à plusieurs voies, les coefficients de la réponse impulsionnelle étant calculés au moyen d'un modèle de canal vectoriel.

2. Dispositif de simulation de signaux selon la revendication 1, **caractérisé en ce qu'**on prévoit pour le calcul des coefficients de pondération un ordinateur de commande externe (3) qui est relié au processeur matriciel (2) par l'intermédiaire d'une interface de données.

3. Dispositif de simulation de signaux selon la revendication 2, **caractérisé en ce que** l'ordinateur de commande externe (3) est un ordinateur personnel.

4. Dispositif de simulation de signaux selon la revendication 2, **caractérisé en ce que** l'interface de données est une interface USB.

5. Dispositif de simulation de signaux selon l'une quelconque des revendications 2 à 4, **caractérisé en ce qu'**on prévoit pour la lecture synchrone des coefficients de pondération dans le processeur matriciel (2) une mémoire temporaire (4), qui est reliée à l'ordinateur de commande (3) par l'intermédiaire de l'interface de données, et s'assure que le processus de transmission de données de coefficients asynchrone de l'ordinateur de commande dans le processeur matriciel est découplé du processus de multiplication matricielle en temps réel.

6. Dispositif de simulation de signaux selon la revendication 5, **caractérisé en ce que** la mémoire temporaire (4) fait partie du processeur matriciel (2).

7. Dispositif de simulation de signaux selon la revendication 1, **caractérisé en ce que** les coefficients de la réponse impulsionnelle vectorielle sont calculés au moyen d'un modèle de canal vectoriel directement dans le processeur matriciel (2).

8. Dispositif de simulation de signaux selon la revendication 1, **caractérisé en ce que** les coefficients de la réponse impulsionnelle vectorielle sont calculés au moyen d'un modèle de canal vectoriel, à l'aide d'un processeur de signaux numérique externe.

9. Dispositif de simulation de signaux selon la revendication 1, **caractérisé en ce que** les coefficients de la réponse impulsionnelle vectorielle sont calculés au moyen d'un modèle de canal vectoriel sur l'ordinateur de commande externe (3).

10. Dispositif de simulation de signaux selon la revendication 1, **caractérisé en ce que** les signaux de sortie numériques du processeur matriciel (2) sont traités directement dans une partie de récepteur de base numérique du récepteur (6).

11. Dispositif de simulation de signaux selon la revendication 1, **caractérisé en ce que** les signaux de sortie numériques du processeur matriciel (2) sont convertis au moyen d'une unité (5) destinée à la conversion analogique/numérique et au mélange ascendant en signaux analogiques, sont soumis à un mélange ascendant et introduits dans une partie de fréquence intermédiaire ou de haute fréquence du récepteur (6).

12. Dispositif de simulation de signaux selon l'une quelconque des revendications précédentes, **caractérisé en ce que** le processeur matriciel numérique (2) est constitué d'un ou de plusieurs FPGA (Field Programmable Gate arrays ; réseaux prédiffusés programmables).

13. Dispositif de simulation de signaux selon la revendication 1, **caractérisé en ce que** pour chaque signal d'entrée (1, ..., Nₛ) et pour chaque signal de sortie (1, ..., Nₑ) du processeur matriciel (2), des valeurs différentes de coefficients de pondération sont calculées, résultant de la direction d'incidence prédéterminée des signaux directement incidents et des signaux réfléchis et de la position de l'élément d'antenne, c'est-à-dire que pour chaque signal d'entrée et signal réfléchi généré en interne, un front d'onde régulier est produit, lequel est incident depuis la direction du signal directement incident ou du dernier point de réflexion du signal réfléchi, le calcul des coefficients pour les signaux ayant lieu sur l'ordinateur de commande (3) en fonction de la position d'émission des signaux et de la position et de l'orientation prédéterminées des lobes de rayonnement d'antenne réseau.

14. Dispositif de simulation de signaux selon la revendication 1, **caractérisé en ce que** le calcul des coefficients de pondération dans l'ordinateur de commande (3) a lieu dans un processus précédent le processus de simulation proprement dit, au cours duquel les coefficients de pondération ne sont plus que transmis.

15. Dispositif de simulation de signaux selon la revendication 5, **caractérisé en ce que** la lecture de la mémoire temporaire (4) et le transfert des données depuis l'ordinateur de commande (3) sont synchronisés par l'intermédiaire d'un signal 1 PPS (impulsions par seconde), qui est fourni par le générateur de signaux (1) et est synchrone avec le rythme sensiblement plus important des signaux de bande de base numériques, qui est transmis également au processeur matriciel (2) par l'intermédiaire des entrées de bande de base.

16. Dispositif de simulation de signaux selon la revendication 1, **caractérisé en ce que** la convolution avec la réponse impulsionnelle vectorielle du canal à plusieurs voies est réalisée par l'intermédiaire d'un circuit de retard à saignées (tapped delay line) au moyen de dispositifs de retard fixes (8) et de coefficients variables, sur la base d'un modèle de canal WSSUS (Wide-sense Stationary Uncorrelated Scattering; stationnaire au sens large et à diffuseurs non corrélés), le signal de sortie du générateur de signaux (9) et les signaux de sortie de chacun de ces dispositifs de retard (8) sont individuellement pondérés dans des multiplicateurs (10) et additionnés dans un additionneur (11), la structure correspondant à l'implémentation d'un filtre FIR (Finite Impulse Response ; réponse impulsionnelle finie), le signal de sortie du générateur de signaux (9) et les signaux de sortie des dispositifs de retard (8) individuels sont multipliés par les vecteurs de pondération (*̅f̅*̅), dont le nombre d'éléments correspond au nombre d'éléments d'antenne de l'antenne réseau du récepteur test (6), le nombre (M) de dispositifs de retard (8) étant supérieur au nombre d'échos et étant obtenu à partir de la longueur de la réponse impulsionnelle et de la largeur de bande de signaux, de la longueur du retard maximal et du taux d'échantillonnage des signaux, de telles structures sont produites pour la génération d'un canal vectoriel Nₑ, Nₑ étant le nombre d'éléments d'antenne de l'antenne réseau, et les éléments complexes de tous les vecteurs de pondération (*̅f̅*̅) sont les valeurs d'échantillonnage de la réponse impulsionnelle vectorielle du canal à plusieurs voies et contiennent aussi bien les informations pour une réponse impulsionnelle de canal que les informations de direction relatives aux signaux d'entrée individuels.

17. Dispositif de simulation de signaux selon les revendications 16 et 12, **caractérisé en ce que**, pour la réalisation des dispositifs de retard (8) des séquences de retards de signaux cadencés sont implémentées dans le FPGA (Field Programmable Gate Array ; réseau prédiffusé programmable) respectivement dans les FPGA.

18. Dispositif de simulation de signaux selon la revendication 16, **caractérisé en ce que**, pour la réalisation d'une simulation de canal vectoriel à plusieurs voies, le processeur matriciel (2) est étendu respectivement à des modules de canal vectoriel (12) associés à un signal d'entrée (1, ..., Nₛ), chaque module de canal vectoriel étant constitué de Nₑ filtres FIR, l'ordinateur de commande (3) ne calcule pas que les coefficients de pondération, mais également les vecteurs de pondération (*̅f̅*̅), la longueur de ces vecteurs de pondération (*̅f̅*̅), c'est-à-dire le nombre d'éléments complexes de chaque vecteur de pondération (*̅f̅*̅), étant égale au nombre d'éléments d'antenne, et un ensemble complet comprenant M vecteurs de pondération de ce type étant produit pour chaque élément d'antenne de l'antenne réseau du récepteur (6) en tenant compte de chaque signal d'entrée (1, ..., Nₛ), M étant le nombre de dispositifs du filtre FIR.

19. Utilisation du dispositif de simulation de signaux selon l'une quelconque des revendications précédentes dans le cadre d'un simulateur de signaux de satellite GPS.

20. Utilisation du dispositif de simulation de signaux selon l'une quelconque des revendications précédentes dans le cadre d'un simulateur de signaux de satellite Galileo.
